# EUROPEAN PATENT APPLICATION

(11) **EP 4 024 516 A1**
(43) Date of publication of application: **06.07.2022**
(21) Application number: 20937875.1
(22) Date of filing: 11.12.2020
(51) Int. Cl.: H01M 4/36

(54) **COMPOSITE POSITIVE ELECTRODE MATERIAL FOR LITHIUM ION BATTERY, PREPARATION METHOD THEREFOR, AND USE THEREOF**

(30) Priority: 25.05.2020 CN 202010448907
(71) Applicant: SVOLT ENERGY TECHNOLOGY CO., LTD, Changzhou, Jiangsu 213200 (CN)
(72) Inventor: XU, Xinpei, hangzhou, Jiangsu 213200 (CN); YANG, Hongxin, hangzhou, Jiangsu 213200 (CN); JIANG, Weijun, hangzhou, Jiangsu 213200 (CN); QIAO, Qiqi, hangzhou, Jiangsu 213200 (CN); SUN, Mingzhu, hangzhou, Jiangsu 213200 (CN); SHI, Zetao, hangzhou, Jiangsu 213200 (CN); WANG, Pengfei, hangzhou, Jiangsu 213200 (CN); MA, Jiali, hangzhou, Jiangsu 213200 (CN); CHEN, Sixian, hangzhou, Jiangsu 213200 (CN)
(74) Representative: De Bonis, Paolo
(86) International application number: PCT/CN2020/135525
(87) International publication number: WO 2021/238152

(57) **Abstract**

A composite positive electrode material for a lithium ion battery, a preparation method therefor, and a use thereof. The composite positive electrode material comprises a positive electrode material core and a halide coating layer that is coated on the surface of the positive electrode material core, wherein halide comprises Li₃YX₆, and X is at least one among halogens. By means of the coating of the halide coating layer, the ionic conductivity and structural stability of the positive electrode material are greatly increased, which reduces the surface impedance of the material.

## Description

### TECHNICAL FIELD

The present disclosure relates to the technical field of batteries, for example, to a composite cathode material for a lithium-ion battery, a preparation method thereof, and use thereof.

### BACKGROUND

Lithium-ion batteries have been widely used in every aspect of life because of their high energy density and good cycling performance. As the core of lithium-ion batteries, the development of cathode materials directly affects the development prospects of lithium-ion batteries. Ternary cathode materials have been widely used in automobile and electronic industries due to their high density and good cycle life. Among the ternary cathode materials, NCM (NiₓCo_{y}Mn_{z}) and NCA (NiₓCo_{y}Al_{z}) are well known. However, cobalt is not only expensive but also pollutes the environment, which limits the development of ternary materials.

Cobalt-free cathode materials have been widely concerned by researchers because of their high reversible specific capacity and low price.

CN107546385A discloses a method for preparing LiNiₓMn₁₋ₓO₂ binary cathode material and prepared LiNiₓMn₁₋ₓO₂. The method includes the following steps that (1) preparing a binary-nickel-and-manganese-salt water solution and a mixed alkali water solution; (2) adding the binary-nickel-and-manganese-salt water solution and the mixed alkali water solution into a microwave reactor introducing nitrogen for protection in a certain flow velocity respectively, and stirring and reacting at a constant temperature; (3) transferring the reactant to a hydrothermal reaction kettle for a hydrothermal reaction; (4) filtering, washing and drying the coprecipitate; (5) preparing the dried coprecipitate into a lithium salt, mixing and grounding, then putting into a sintering furnace for a high-temperature solid-phase reaction, to obtain the binary cathode material. The Ni-Mn based binary cathode material prepared by this method has an initial discharge capacity of over 170 mAh/g and good cycling performance.

CN109811412A discloses a single-crystal appearance layered nickel lithium manganate cathode material and a preparation method thereof. The method includes the following steps: (1) preparing a nickel-manganese precursor by using a nickel salt and a manganese salt by a wet chemical method, where the molar ratio of Ni to Mn is 1:1; (2) pre-sintering the nickel-manganese precursor to obtain a nickel-manganese oxide precursor; (3) mixing the nickel-manganese oxide precursor with a lithium source and an M source additive, and then performing calcination to obtain the single-crystal appearance layered nickel lithium manganate cathode material.

However, due to the absence of cobalt, the conductivity of the preceding materials is low. Compared with traditional ternary materials such as NCM and NCA, their conductivity and structural stability are poor, which leads to certain constraints on electrochemical performance.

### SUMMARY

The present disclosure provides a composite cathode material for a lithium-ion battery, a preparation method thereof, and use thereof.

The present disclosure provides a composite cathode material for a lithium-ion battery in an embodiment, which includes a cathode material core and a halide cladding layer cladded on the surface of the cathode material core, where the halide includes Li₃YX₆, where X is at least one of halogens.

In an embodiment provided by the present disclosure, the halide is cladded on the cathode material. With the cladding of the halide cladding layer, the ionic conductivity and structural stability of the cathode material are greatly improved, and the surface impedance of the material is reduced. The technical principle is as follows: firstly, the interaction between the halogen anions having a valence state of -1 in the halide provided by the present disclosure and the lithium ions is weak, which causes good lithium-ion conductivity; secondly, the large radius of halogen ions is beneficial to the migration of lithium ions; then, the halide has good stability and thus can form a stable and firm connection with the matrix material; moreover, the halide cladding layer has good chemical stability, which prevents the cathode material from being in contact with the electrolyte and reduces the occurrence of side reactions. The combined action of the above factors enables the composite cathode material to have extremely high ionic conductivity and structural stability, thereby improving the capacity, initial efficiency, and cycling performance of the material.

For the chemical composition of the cladding layer, a sulfide solid electrolyte or an oxide solid electrolyte, although having good ionic conductivity, cannot achieve the technical effect intended to be achieved by the present disclosure due to the poor chemical stability of the sulfide. The reaction involved in the oxide solid electrolyte is complex, and the contact between the oxide solid electrolyte and air and moisture causes the occurrence of reactions, which reduces the cycling stability; the oxide has hard particles, poor solid interface contact, high density, low mass energy density, and thus is not suitable for the large-scale production process.

In an embodiment, the halide is Li₃YCl₆ and/or Li₃YBr₆. For example, the halide may be Li₃YCl₆, may be Li₃YBr₆, or may be a mixture of Li₃YCl₆ and Li₃YBr₆.

In an embodiment, the cathode material core includes a cobalt-free cathode material.

In an embodiment, the cathode material core includes a lithium nickel manganate cathode material.

In an embodiment, the lithium nickel manganate cathode material has a chemical formula of LiNiₓMn_{y}O₂, where x is greater than or equal to 0.55 and less than or equal to 0.95, and y is greater than or equal to 0.05 and less than or equal to 0.45. For example, x is 0.55, 0.6, 0.65, 0.7, 0.72, 0.75, 0.8, 0.9, 0.95, etc. For example, y is 0.05, 0.08, 0.1, 0.2, 0.3, 0.35, 0.4, 0.45, etc.

In an embodiment provided by the present disclosure, the halide is useful in improving the ionic conductivity and stabilizing the structure for various lithium-ion battery cathode materials commonly used in the art (such as lithium iron phosphate, NCM ternary, NCA ternary, lithium cobaltate, lithium manganate, lithium nickel cobaltate, lithium nickel manganate, etc.).

In the present disclosure, with the introduction of the halide cladding layer, the improvement in the performance of cobalt-free cathode materials that are cobalt-free cathode materials based on ternary materials is particularly outstanding.

In the present disclosure, the cladding of the halide cladding layer on the surface of the cobalt-free cathode material can also reduce the residual alkali. The technical principle is as follows: at a high temperature (700 °C to 800 °C), the halogen (such as Cl) in the halide will react with a part of lithium at the contact position between the halide cladding layer and the surface of the cobalt-free cathode material to form oxides to intercalate into the material at a high temperature, thereby improving the product performance while reducing the residual alkali.

In an embodiment, the content of Y element in Li₃YX₆ is 0.1% to 1% based on 100% of the mass of a cathode material core, such as 0.1%, 0.3%, 0.5%, 0.7%, 0.8%, 0.9%, 1%, etc.

In an embodiment of the present disclosure, if the content of Y element in Li₃YX₆ is less than 0.1%, the improvement effect on the conductivity is not distinct; and if the content of Y in Li₃YX₆ is greater than 1%, the intercalation and deintercalation of lithium ions are hindered, and the electrochemical performance is degraded.

In an embodiment, the content of Y element in Li₃YX₆ is 0.1% to 0.3% based on 100% of the mass of a cathode material core.

In an embodiment, the cathode material core has a particle size D50 of 1 µm to 5 µm, such as 1 µm, 2 µm, 2.5 µm, 3 µm, 3.5 µm, 4 µm, 5 µm, etc.

In an embodiment, the cathode material core has a particle size D50 of 1 µm to 3 µm.

In an embodiment, Li₃YX₆ has a particle size D50 of 5 nm to 500 nm, such as 5 nm, 10 nm, 15 nm, 20 nm, 25 nm, 30 nm, 35 nm, 40 nm, 50 nm, 65 nm, 80 nm, 100 nm, 15 nm, 130 nm, 150 nm, 180 nm, 200 nm, 230 nm, 260 nm, 300 nm, 350 nm, 375 nm, 400 nm, 450 nm, 500 nm, etc.

In an embodiment, Li₃YX₆ has a particle size D50 of 50 nm to 100 nm.

In an embodiment provided by the present disclosure, the cathode material core has a particle size D50 of 1 µm to 5 µm, and Li₃YX₆ has a particle size D50 of 5 nm to 500 nm. In such ranges, a good cladding layer can be formed on the surface of the cladded matrix material. In the composite cathode material provided in an embodiment of the present disclosure, the halide cladding layer has good chemical stability and does not react with oxygen and water in the air, the composite cathode material has a low content of residual alkali and free water, and the total amount of residual lithium carbonate and lithium hydroxide in the material is less than 0.3% (wt); the content of free water in the material is less than 200 ppm; the specific surface area of the material ranges from 0.2 m²/g to 0.9 m²/g; and the pH of the material is less than or equal to 12.

The present disclosure provides a method for preparing the composite cathode material for a lithium-ion battery, including the following steps:
mixing a cladding agent with a matrix cathode material, and then performing high-temperature treatment at 400 °C to 800 °C, such as 400 °C, 425 °C, 450 °C, 460 °C, 480 °C, 500 °C, 525 °C, 550 °C, 580 °C, 600 °C, 650 °C, 700 °C, 730 °C, 750 °C, 800 °C, etc., under an oxygen-containing atmosphere to obtain a composite cathode material.

In the above steps, the cladding agent includes Li₃YX₆, and X is at least one of halogens.

In an embodiment provided in the present disclosure, the high-temperature treatment is performed at 400 °C to 800 °C. If the temperature is lower than 400 °C, the bonding between the cladding layer and the cathode material core is poor. If the temperature is higher than 800 °C, the structure of the halide changes seriously, and for ternary materials or cobalt-free cathode materials, the mixed arrangement of lithium and nickel is intensified, and thus the improvement effect on the conductivity is reduced. The temperature is preferably 400 °C to 700 °C.

It is to be noted that when the temperature of the high-temperature treatment is higher than 700 °C and lower than 800 °C, the structure of Li₃YX₆ is slightly damaged, which reduces the improvement effect on ionic conductivity, and meanwhile, halogens (such as Cl) in Li₃YX₆ react with a part of lithium at the contact position with the surface of the cathode material, especially at the contact position with the surface of the cobalt-free cathode material, to form oxides to intercalate into the material at a high temperature, thereby improving the product performance while reducing the residual alkali.

In an embodiment, oxygen is present at a volume concentration of 20% to 100% in the oxygen-containing atmosphere, such as 20%, 25%, 30%, 40%, 45%, 50%, 60%, 70%, 80%, 90%, 100%, etc.

In an embodiment, oxygen is present at a volume concentration of 50% to 90% in the oxygen-containing atmosphere.

In an embodiment, the manner of the mixing is dry mixing.

In an embodiment, the mixing includes: mixing the cladding agent with the matrix cathode material in mixing equipment at a rotational speed of 2000 rpm to 3000 rpm, such as 2000 rpm, 2250 rpm, 2500 rpm, 2700 rpm, 2800 rpm, 3000 rpm, etc.

In an embodiment, the mixing is performed for 10 minutes to 20 minutes, such as 10 minutes, 15 minutes, 18 minutes, 20 minutes, etc.

In an embodiment, the high-temperature treatment is performed at a temperature of 400 °C to 700 °C.

In an embodiment, the high-temperature treatment is performed for 4 hours to 8 hours, such as 4 hours, 4.2 hours, 4.5 hours, 5 hours, 5.5 hours, 5.7 hours, 6 hours, 6.5 hours, 7 hours, 7.5 hours, 8 hours, etc.

In an embodiment, the method further includes steps of grinding and sieving after the high-temperature treatment.

In an embodiment, the matrix cathode material is lithium nickel manganate, and a method for preparing the lithium nickel manganate includes the following steps.
(a) mixing a lithium source and a precursor NiₓMn_{y}(OH)₂ uniformly, where x is greater than or equal to 0.55 and less than or equal to 0.95, and y is greater than or equal to 0.05 and less than or equal to 0.45;
(b) performing a high-temperature reaction at 800 °C to 1000 °C, such as 800 °C, 820 °C, 850 °C, 900 °C, 950 °C, 970 °C, 1000 °C, etc., to obtain the lithium nickel manganate.

In an embodiment, the lithium source in step (a) is LiOH.

In an embodiment, the mixing in step (a) is: mixing in high-speed mixing equipment at a rotational speed of 2000 rpm to 3000 rpm for 10 minutes to 20 minutes.

In an embodiment, the high-temperature reaction in step (b) is performed for 8 hours to 12 hours, such as 8 hours, 9 hours, 9.5 hours, 10 hours, 11 hours, 12 hours, etc.

In an embodiment, the high-temperature reaction in step (b) is performed under an oxygen-containing atmosphere having a volume concentration of oxygen greater than 90%.

In an embodiment, the gas flow rate of the oxygen-containing atmosphere is 2 L/min to 20 L/min, such as 2 L/min, 5 L/min, 7 L/min, 10 L/min, 12 L/min, 14 L/min, 15 L/min, 20 L/min, etc.

In an embodiment, the high-temperature reaction in step (b) is followed by steps of cooling and crushing.

In an embodiment, the method includes the following steps;
(1) preparing a matrix cathode material lithium nickel manganate through the following steps:
   (a) mixing LiOH and a precursor NiₓMn_{y}(OH)₂ in high-speed mixing equipment at a rotational speed of 2000 rpm to 3000 rpm for 10 minutes to 20 minutes, where x is greater than or equal to 0.55 and less than or equal to 0.95, and y is greater than or equal to 0.05 and less than or equal to 0.45;
   (b) performing a high-temperature reaction at 800 °C to 1000 °C for 8 hours to 12 hours under an oxygen-containing atmosphere having a volume concentration of oxygen greater than 90% to obtain lithium nickel manganate, cooling and crushing for later use, where the gas flow rate of the oxygen-containing atmosphere is 2 L/min to 20 L/min;
(2) mixing a cladding agent and the matrix cathode material in mixing equipment at a rotational speed of 2000 rpm to 3000 rpm for 10 minutes to 20 minutes, where the cladding agent is Li₃YCl₆ and/or Li₃YBr₆, performing high-temperature treatment at 400 °C to 700 °C for 4 hours to 8 hours under an oxygen-containing atmosphere, where oxygen is present at a volume concentration of 20% to 100% in the oxygen-containing atmosphere, grinding and sieving by a sieve with a mesh size of 300 to 400 to obtain a composite cathode material, where the composite cathode material includes lithium nickel manganate and a cladding layer cladded on the surface of the lithium nickel manganate, where the cladding layer is Li₃YCl₆ and/or Li₃YBr₆;
   where, the content of Y element in the cladding layer is 0.1% to 1% based on 100% of the mass of a cathode material core.

The present disclosure provides a cathode in an embodiment, which includes the composite cathode material for a lithium-ion battery described in an embodiment of the present disclosure.

The present disclosure provides a lithium-ion battery in an embodiment, which includes the cathode material described in an embodiment of the present disclosure.

### BRIEF DESCRIPTION OF DRAWINGS

The drawings are used to provide a further understanding of the solutions of the present disclosure, constitute a part of the description, explain the solutions of the present disclosure in conjunction with the embodiments of the present application, and do not limit the solutions of the present disclosure.
FIGS. 1a and 1b show SEM diagrams of a material before cladding (cathode material prepared in a comparative example provided in the present disclosure) at different multiples;
FIGS. 2a and 1b show SEM diagrams of a material after cladding (cathode material prepared in an example provided in the present disclosure) at different multiples;
FIG. 3 shows initial charge-discharge curves of the materials before and after cladding, where two curves marked by arrows in the figure correspond to the composite cathode material after cladding, and two curves not marked by arrows correspond to the cathode material before cladding, where the material before cladding corresponds to a cathode material prepared in a comparative example, and the material after cladding corresponds to a composite cathode material prepared in an example; and
FIG. 4 shows cycling performance curves of materials before and after the cladding, where the material before cladding corresponds to a cathode material prepared in a comparative example, and the material after cladding corresponds to a composite cathode material prepared in an example.

### DETAILED DESCRIPTION

Technical solutions of the present disclosure are further described below through specific embodiments in conjunction with the drawings.

### Example 1

This example provided a composite cathode material for a lithium-ion battery. The composite cathode material included a cathode material core and a halide cladding layer cladded on the surface of the cathode material core. The cathode material core was LiNi_{0.75}Mn_{0.25}O₂, and the halide was Li₃YCl₆. The content of Y element in Li₃YCl₆ was 0.5% based on 100% of the mass of the cathode material core, and the particle size D50 of the cathode material core was 3 µm.

This example further provided a method for preparing the composite cathode material. The method included the following steps.
(1) A matrix cathode material lithium nickel manganate was prepared through the following steps.
   (a) LiOH and a precursor Ni_{0.75}Mn_{0.25}(OH)₂ were mixed in high-speed mixing equipment at a rotational speed of 2500 rpm for 15 minutes.
   (b) A high-temperature reaction was performed at 900 °C for 10 hours under an oxygen atmosphere at the gas flow rate of oxygen of 10 L/min to obtain lithium nickel manganate LiNi_{0.75}Mn_{0.25}O₂, and the lithium nickel manganate was cooled and crushed for later use.
(2) A cladding agent Li₃YCl₆ and the matrix cathode material were mixed in mixing equipment at a rotational speed of 2200 rpm for 20 minutes, high-temperature treatment was performed at 600 °C for 5 hours under an oxygen-containing atmosphere which was a mixed atmosphere of oxygen and nitrogen with volume concentrations of 60% and 40%, respectively, and the treated mixture was ground and sieved by a sieve with a mesh size of 300 to obtain a composite cathode material.

### Example 2

This example provided a composite cathode material for a lithium-ion battery. The composite cathode material included a cathode material core and a halide cladding layer cladded on the surface of the cathode material core. The cathode material core was LiNi_{0.6}Mn_{0.4}O₂, and the halide was Li₃YBr₆. The content of Y element in Li₃YBr₆ was 0.3% based on 100% of the mass of the cathode material core, and the particle size D50 of the cathode material core was 3 µm.

This example further provided a method for preparing the composite cathode material. The method included the following steps.
(1) A matrix cathode material lithium nickel manganate was prepared through the following steps.
   (a) LiOH and a precursor Ni_{0.6}Mn_{0.4}(OH)₂ were mixed in high-speed mixing equipment at a rotational speed of 2000 rpm for 20 minutes.
   (b) A high-temperature reaction was performed at 1000 °C for 8 hours under an oxygen atmosphere at the gas flow rate of oxygen of 5 L/min to obtain lithium nickel manganate LiNi_{0.6}Mn_{0.4}O₂, and the lithium nickel manganate was cooled and crushed for later use.
(2) A cladding agent Li₃YBr₆ and the matrix cathode material were mixed in mixing equipment at a rotational speed of 2750 rpm for 10 minutes, high-temperature treatment was performed at 500 °C for 5.5 hours under an oxygen-containing atmosphere which was a mixed atmosphere of oxygen and nitrogen with volume concentrations of 40% and 60%, respectively, and the treated mixture was ground and sieved by a sieve with a mesh size of 300 to obtain a composite cathode material.

### Example 3

This example provided a composite cathode material for a lithium-ion battery. The composite cathode material included a cathode material core and a halide cladding layer cladded on the surface of the cathode material core. The cathode material core was LiNi_{0.7}Mn_{0.3}O₂, and the halide was Li₃YCl₆. The content of Y element in Li₃YCl₆ was 0.8% based on 100% of the mass of the cathode material core, and the particle size D50 of the cathode material core was 3 µm.

This example further provided a method for preparing the composite cathode material. The method included the following steps.
(1) A matrix cathode material lithium nickel manganate was prepared through the following steps.
   (a) Li₂CO₃ and a precursor Ni_{0.7}Mn_{0.3}(OH)₂ were mixed in high-speed mixing equipment at a rotational speed of 2800 rpm for 16 minutes.
   (b) A high-temperature reaction was performed at 800 °C for 12 hours under an oxygen atmosphere at the gas flow rate of oxygen of 15 L/min to obtain lithium nickel manganate LiNi_{0.7}Mn_{0.3}O₂, and the lithium nickel manganate was cooled and crushed for later use.
(2) A cladding agent Li₃YCl₆ and the matrix cathode material were mixed in mixing equipment at a rotational speed of 2250 rpm for 15 minutes, high-temperature treatment was performed at 450 °C for 8 hours under an oxygen-containing atmosphere which was a mixed atmosphere of oxygen and nitrogen with volume concentrations of 85% and 15%, respectively, and the treated mixture was ground and sieved by a sieve with a mesh size of 400 to obtain a composite cathode material.

### Example 4

This example provided a composite cathode material for a lithium-ion battery. The composite cathode material included a cathode material core and a halide cladding layer cladded on the surface of the cathode material core. The cathode material core was lithium iron phosphate, and the halide was Li₃YCl₆. The content of Y element in Li₃YCl₆ was 0.7% based on 100% of the mass of the cathode material core, and the particle size D50 of the cathode material core was 3.5 µm.

The matrix material lithium iron phosphate was prepared through the following steps.
(1) Phosphoric acid and ferrous sulfate were added into a three-neck flask and stirred for about 15 minutes at a rotational speed of 300 rpm, then excessive hydrogen peroxide was added, and the pH of the solution was adjusted with ammonia water until white precipitation appeared. (2) The white precipitate was filtered, washed, and dried under vacuum at 60 °C to obtain iron phosphate (FePO₄·2H₂O) powder. (3) The white powder, lithium hydroxide, and acetylene black were mixed in mixing equipment and reacted at 600 °C for 12 hours under a nitrogen atmosphere at the gas flow rate of nitrogen of 15 L/min to obtain lithium iron phosphate powder as the matrix material, and the lithium iron phosphate powder was cooled and crushed for later use.

The cladding process was as follows: a cladding agent (Li₃YCl₆) and the matrix material were mixed in mixing equipment, high-temperature treatment was performed at 450 °C for 8 hours under an oxygen-containing atmosphere which was a mixed atmosphere of oxygen and nitrogen with volume concentrations of 85% and 15%, respectively, and the treated mixture was ground and sieved by a sieve with a mesh size of 400 to obtain a composite cathode material.

### Example 5

This example provided a composite cathode material for a lithium-ion battery. The composite cathode material included a cathode material core and a halide cladding layer cladded on the surface of the cathode material core. The cathode material core was LiNi_{0.8}Mn_{0.2}O₂, and the halide was Li₃YCl₆. The content of Y element in Li₃YCl₆ was 0.15% based on 100% of the mass of the cathode material core, and the particle size D50 of the cathode material core was 5 µm.

This example further provided a method for preparing the composite cathode material. The method included the following steps.
(1) A matrix cathode material lithium nickel manganate was prepared through the following steps.
   (a) LiOH and a precursor Ni_{0.8}Mn_{0.2}(OH)₂ were mixed in high-speed mixing equipment at a rotational speed of 2000 rpm for 20 minutes.
   (b) A high-temperature reaction was performed at 950 °C for 9 hours under an oxygen atmosphere at the gas flow rate of oxygen of 12 L/min to obtain lithium nickel manganate LiNi_{0.8}Mn_{0.2}O₂, and the lithium nickel manganate was cooled and crushed for later use.
(2) A cladding agent Li₃YCl₆ and the matrix cathode material were mixed in mixing equipment at a rotational speed of 2600 rpm for 15 minutes, high-temperature treatment was performed at 550 °C for 7 hours under an oxygen-containing atmosphere which was a mixed atmosphere of oxygen and argon with volume concentrations of 90% and 10%, respectively, and the treated mixture was ground and sieved by a sieve with a mesh size of 250 to obtain a composite cathode material.

### Example 6

The preparation method and conditions are the same as those in Example 1 except that the content of Y element in Li₃YCl₆ was 1.5% based on 100% of the mass of the cathode material core.

### Example 7

The preparation method and conditions are the same as those in Example 1 except that the content of Y element in Li₃YCl₆ was 0.05% based on 100% of the mass of the cathode material core.

### Comparative Example 1

This comparative example was uncladded cathode material LiNi_{0.75}Mn_{0.25}O₂.

### Comparative Example 2

The preparation method and conditions were the same as those in Example 1 except that Li₃YCl₆ was replaced with an oxide solid electrolyte LLZO (Li₇La₃Zr₂O₁₂).

### Comparative Example 3

The preparation method and conditions were the same as those in Example 1 except that Li₃YCl₆ was replaced with a sulfide solid electrolyte LGPS (Li₁₀GeP₂S₁₂).

### Comparative Example 4

The preparation method and conditions were the same as those in Example 1 except that the temperature of the high-temperature treatment was adjusted to 300 °C in step (2).

### Comparative Example 5

The preparation method and conditions were the same as those in Example 1 except that the temperature of the high-temperature treatment was adjusted to 820 °C in step (2).

### Test:

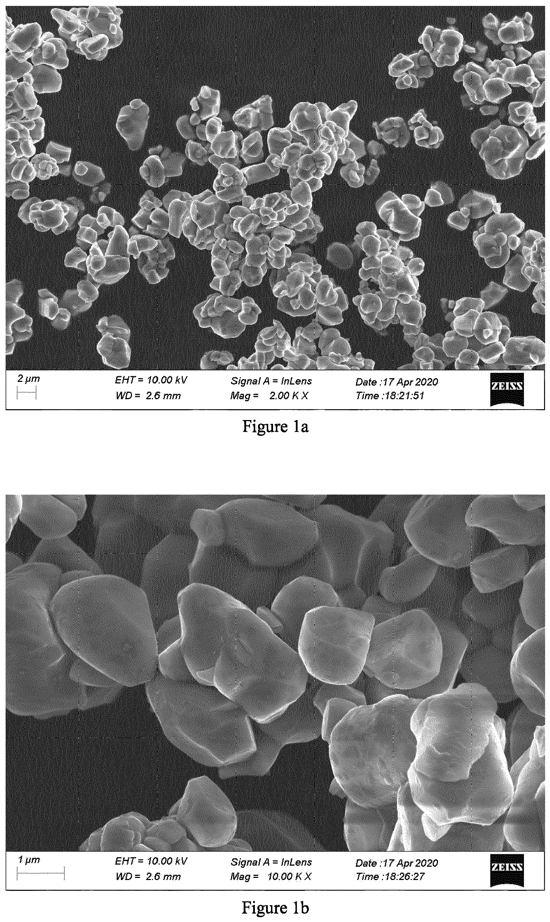

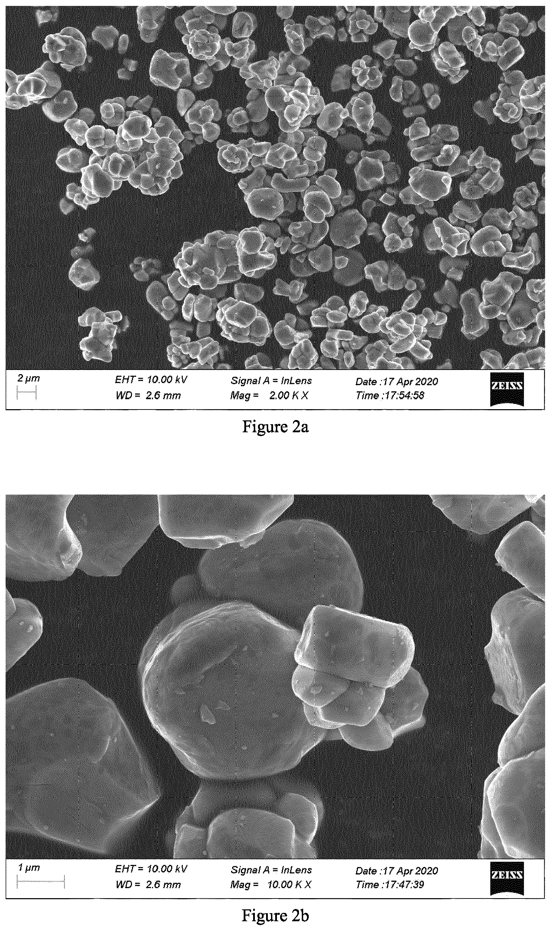

The morphology of the materials before and after cladding was analyzed by scanning electron microscope (SEM). FIGS. 1a and 1b show SEM diagrams of a material before cladding (the cathode material prepared in Comparative Example 1) at different multiples, and FIGS. 2a and 1b show SEM diagrams of a material after cladding (the composite cathode material prepared in Example 1) at different multiples. As can be seen from the figures, flaked cladding materials were distributed on the particles of the sample after cladding.

The diffusion coefficient of lithium ions in the materials was calculated by galvanostatic intermittent titration technique (GITT). The data is shown in Table 1.

**Table 1**

| No. | Sample | D (cm²/s) |
|---|---|---|
| Comparative Example 1 | Before cladding | 1.32^{∗}10⁻⁸ |
| Example 1 | After cladding | 1.65^{∗}10⁻⁷ |
| Comparative Example 2 | Replaced with an oxide electrolyte | 0.93^{∗}10⁻⁷ |
| Comparative Example 3 | Replaced with a sulfide electrolyte | 1.33^{∗}10⁻⁷ |

As can be seen from Table 1, the diffusion rate of lithium ions was increased and the conductivity of the material was improved after cladded with Li₃YCl₆.

Batteries were prepared by using the materials of each example and comparative example, and tested for initial charge-discharge performance and cycling performance. The batteries were prepared through the following steps. Firstly, the obtained cathode material, conductive agent SP, polyvinylidene fluoride, and N-methylpyrrolidone were mixed to prepare a paste, where the mass ratio of the cathode material, conductive agent, and polyvinylidene fluoride was 92:4:4, and the N-methylpyrrolidone was added in an amount that allowed the solid content of the paste to be 50%. Secondarily, the paste was uniformly cladded onto an aluminum foil, and the aluminum foil was dried at 100 °C for 12 hours to prepare an electrode. Then, the electrode was subjected to blanking into a round electrode with a diameter of 14 µm and prepared into a button half-cell in a glove box. Finally, the button cell was put on hold and subjected to the charge-discharge test. The initial charge-discharge performance test and cycling test were performed under the same test steps. Test conditions were as follows: in a 25 °C incubator, the charge rate and the discharge rate of the initial efficiency test were 0.1C and 0.1C, respectively; the charge rate and the discharge rate of the cycling test were 0.5C and 1C, respectively. The test results are shown in Table 2.

**Table 2**

| No. | Initial efficiency (%) | Capacity retention rate after cycling (%) |
|---|---|---|
| Example 1 | 87.68 | 96.02 |
| Example 2 | 86.23 | 96.11 |
| Example 3 | 86.59 | 95.13 |
| Example 4 (lithium iron phosphate matrix after cladding) | 98.37 | 93.74 |
| Example 5 | 87.02 | 96.45 |
| Example 6 | 87.51 | 97.27 |
| Example 7 | 86.83 | 96.13 |
| Comparative Example 1 | 86.66 | 95.13 |
| Comparative Example 2 | 86.84 | 93.52 |
| Comparative Example 3 | 87.21 | 94.53 |
| Comparative Example 4 | 85.73 | 94.86 |
| Comparative Example 5 | 84.25 | 94.66 |
| Comparative Example 6 (lithium iron phosphate matrix after cladding) | 96.32 | 92.93 |

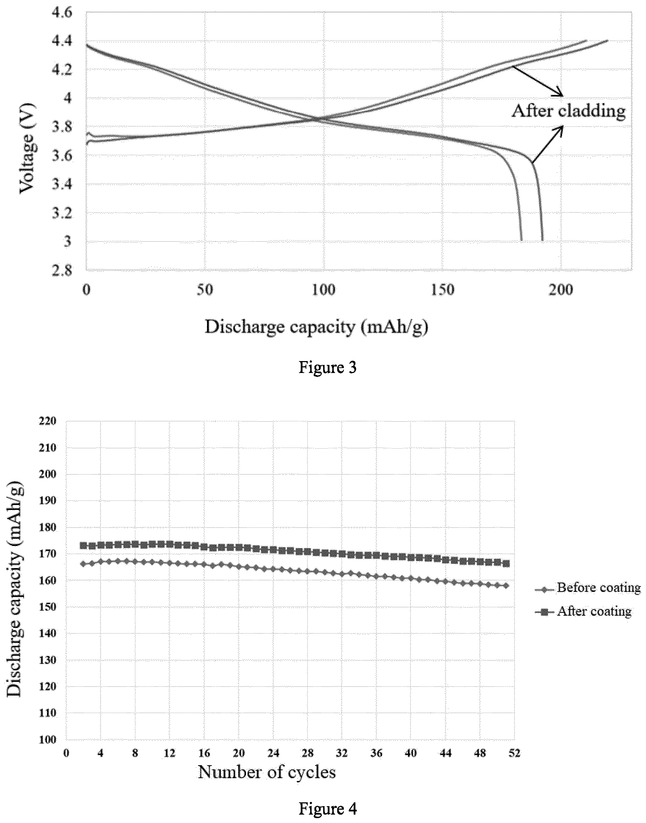

FIG. 3 shows initial charge-discharge curves of the materials before and after cladding. In the figures, two curves marked by arrows in the figure correspond to the composite cathode material after cladding, and two curves not marked by arrows correspond to the cathode material before cladding, where the material before cladding corresponds to the cathode material prepared in Comparative Example 1, and the material after cladding corresponds to the composite cathode material prepared in Example 1. As can be seen from the figure, the discharge capacity of the uncladded material at 0.1C was 183.4 mAh/g, and the initial efficiency was 86.7%; the discharge capacity of the cladded material of the present disclosure at 0.1C was 192.2 mAh/g, and the initial efficiency was 87.29%. Therefore, after cladded with Li₃YCl₆, the electrochemical performance of the material was improved.

FIG. 4 shows cycling performance curves of materials before and after the cladding, where the material before cladding corresponds to the cathode material prepared in Comparative Example 1, and the material after cladding corresponds to the composite cathode material prepared in Example 1. As can be seen from the curves, the material after cladding had good cycling stability, and the reason for the improvement in stability is that the halide cladding formed on the surface of the material had good stability and formed a stable and firm connection with the matrix material, which prevented the cathode material from being in contact with the electrolyte and reduced the occurrence of side reactions. The reason for the improvement in the initial efficiency is that the interaction between the halogen anions having a valence state of -1 in the halide and the lithium ions was weak, which caused good lithium-ion conductivity and reduced the surface impedance, and the large radius of halogen ions was beneficial to the migration of lithium ions.

With the comparison between Example 1 and Comparative Example 2, it indicates that when the cladding material was an oxide solid electrolyte, the ionic conductivity was poor, resulting in the decrease of the electrochemical performance of the material.

With the comparison between Example 1 and Comparative Example 3, it indicates that when the cladding material was a sulfide solid electrolyte, the stability during the cycling process was poor, resulting in the decrease of the cycling performance of the material.

With the comparison between Example 1 and Comparative Example 4, it indicates that when the cladding temperature was 300 °C, the cladding material and the matrix material were not tightly bonded, resulting in the decrease of the cycling stability of the material.

With the comparison between Example 1 and Comparative Example 5, it indicates that when the cladding temperature was 820 °C, the structure of the cladding material might change, affecting the cycling stability of the material.

With the comparison between Example 1 and Example 6, it indicates that when the thickness of the cladding layer was increased, it was difficult for lithium ions to deintercalate during the charge-discharge process.

With the comparison between Example 1 and Example 7, the amount of the halide cladding layer in Example 7 was small, resulting in poor improvement of the ionic conductivity.

## Claims

1. A composite cathode material for a lithium-ion battery, comprising a cathode material core and a halide cladding layer cladded on the surface of the cathode material core, wherein the halide comprises Li₃YX₆, wherein X is at least one of halogens.

2. The composite cathode material for a lithium-ion battery according to claim 1, wherein the halide is Li₃YCl₆ and/or Li₃YBr₆.

3. The composite cathode material for a lithium-ion battery according to claim 1 or 2, wherein the cathode material core comprises a cobalt-free cathode material.

4. The composite cathode material for a lithium-ion battery according to any one of claims 1 to 3, wherein the cathode material core comprises a lithium nickel manganate cathode material.

5. The composite cathode material for a lithium-ion battery according to claim 4, wherein the lithium nickel manganate cathode material has a chemical formula of LiNiₓMn_{y}O₂, wherein x is greater than or equal to 0.55 and less than or equal to 0.95, and y is greater than or equal to 0.05 and less than or equal to 0.45.

6. The composite cathode material for a lithium-ion battery according to any one of claims 1 to 5, wherein the content of Y element in Li₃YX₆ is 0.1% to 1% based on 100% of the mass of the cathode material core.

7. The composite cathode material for a lithium-ion battery according to any one of claims 1 to 6, wherein the content of Y element in the Li₃YX₆ is 0.1% to 0.3% based on 100% of the mass of the cathode material core.

8. The composite cathode material for a lithium-ion battery according to any one of claims 1 to 7, wherein the cathode material core has a particle size D50 of 1 µm to 5 µm.

9. The composite cathode material for a lithium-ion battery according to any one of claims 1 to 8, wherein the cathode material core has a particle size D50 of 1 µm to 3 µm.

10. The composite cathode material for a lithium-ion battery according to any one of claims 1 to 9, wherein the Li₃YX₆ has a particle size D50 of 5 nm to 500 nm.

11. The composite cathode material for a lithium-ion battery according to any one of claims 1 to 10, wherein the Li₃YX₆ has a particle size D50 of 50 nm to 100 nm.

12. A method for preparing the composite cathode material for a lithium-ion battery according to any one of claims 1 to 11, comprising the following steps:
mixing a cladding agent with a matrix cathode material, and then performing high-temperature treatment at 400 °C to 800 °C under an oxygen-containing atmosphere to obtain a composite cathode material;
wherein the cladding agent comprises Li₃YX₆, and X is at least one of halogens.

13. The method according to claim 12, wherein oxygen is present at a volume concentration of 20% to 100% in the oxygen-containing atmosphere.

14. The method according to claim 12 or 13, wherein oxygen is present at a volume concentration of 50% to 90% in the oxygen-containing atmosphere.

15. The method according to any one of claims 12 to 14, wherein the manner of the mixing is dry mixing.

16. The method according to any one of claims 12 to 15, wherein the mixing comprises: mixing the cladding agent with the matrix cathode material in mixing equipment at a rotational speed of 2000 rpm to 3000 rpm.

17. The method according to any one of claims 12 to 16, wherein the mixing is performed for 10 minutes to 20 minutes.

18. The method according to any one of claims 12 to 17, wherein the high-temperature treatment is performed at a temperature of 400 °C to 700 °C.

19. The method according to any one of claims 12 to 18, wherein the high-temperature treatment is performed for 4 hours to 8 hours.

20. The method according to any one of claims 12 to 19, further comprising steps of grinding and sieving after the high-temperature treatment.

21. The method according to any one of claims 12 to 20, wherein the matrix cathode material is lithium nickel manganate, and a method for preparing the lithium nickel manganate comprises:
(a) mixing a lithium source and a precursor NiₓMn_{y}(OH)₂ uniformly, wherein x is greater than or equal to 0.55 and less than or equal to 0.95, and y is greater than or equal to 0.05 and less than or equal to 0.45; and
(b) performing a high-temperature reaction at 800 °C to 1000 °C to obtain the lithium nickel manganate.

22. The method according to claim 21, wherein the lithium source in step (a) is LiOH.

23. The method according to claim 21 or 22, wherein the mixing in step (a) is: mixing in high-speed mixing equipment at a rotational speed of 2000 rpm to 3000 rpm for 10 minutes to 20 minutes.

24. The method according to any one of claims 21 to 23, wherein the high-temperature reaction in step (b) is performed for 8 hours to 12 hours.

25. The method according to any one of claims 21 to 24, wherein the high-temperature reaction in step (b) is performed under an oxygen-containing atmosphere having a volume concentration of oxygen greater than 90%.

26. The method according to claim 25, wherein the gas flow rate of the oxygen-containing atmosphere is 2 L/min to 20 L/min.

27. The method according to any one of claims 21 to 26, wherein the high-temperature reaction in step (b) is followed by steps of cooling and crushing.

28. The method according to any one of claims 12 to 27, comprising the following steps:
(1) preparing a matrix cathode material lithium nickel manganate:
(a) mixing LiOH and a precursor NiₓMn_{y}(OH)₂ in high-speed mixing equipment at a rotational speed of 2000 rpm to 3000 rpm for 10 minutes to 20 minutes, wherein x is greater than or equal to 0.55 and less than or equal to 0.95, and y is greater than or equal to 0.05 and less than or equal to 0.45; and
(b) performing a high-temperature reaction at 800 °C to 1000 °C for 8 hours to 12 hours under an oxygen-containing atmosphere having a volume concentration of oxygen greater than 90% to obtain lithium nickel manganate, cooling and crushing for later use, wherein the gas flow rate of the oxygen-containing atmosphere is 2 L/min to 20 L/min; and
(2) mixing a cladding agent and the matrix cathode material in mixing equipment at a rotational speed of 2000 rpm to 3000 rpm for 10 minutes to 20 minutes, wherein the cladding agent is Li₃YCl₆ and/or Li₃YBr₆, performing high-temperature treatment at 400 °C to 700 °C for 4 hours to 8 hours under an oxygen-containing atmosphere, wherein oxygen is present at a volume concentration of 20% to 100% in the oxygen-containing atmosphere, grinding and sieving by a sieve with a mesh size of 300 to 400 to obtain a composite cathode material, wherein the composite cathode material comprises lithium nickel manganate and a cladding layer cladded on the surface of the lithium nickel manganate, wherein the cladding layer is Li₃YCl₆ and/or Li₃YBr₆;
wherein the content of Y element in the cladding layer is 0.1% to 1% based on 100% of the mass of a cathode material core.

29. A cathode, comprising the composite cathode material for a lithium-ion battery according to any one of claims 1 to 11.

30. A lithium-ion battery, comprising the cathode according to claim 29.
